# EUROPEAN PATENT SPECIFICATION

(11) **EP 4 172 108 B1**
(45) Date of publication and mention of the grant of the patent: **10.01.2024**
(21) Application number: 21734372.2
(22) Date of filing: 01.06.2021
(51) Int. Cl.: C01B 32/30, C01B 32/318, C01B 32/342, C01D 1/04, C01D 7/07, C01D 3/04

(54) **METHOD FOR PRODUCING ACTIVE CARBON**
VERFAHREN ZUR HERSTELLUNG VON AKTIVKOHLE
PROCÉDÉ DE PRODUCTION DE CHARBON ACTIF

(30) Priority: 25.06.2020 FI 20205673
(43) Date of publication of application: 03.05.2023
(73) Proprietor: Lappeenrannan-Lahden teknillinen yliopisto LUT, 53851 Lappeenranta (FI)
(72) Inventor: PONOMAREV, Nikolai, 53851 Lappeenranta (FI)
(74) Representative: Hovinen, Jari Juhani
(86) International application number: PCT/FI2021/050395
(87) International publication number: WO 2021/260258

(56) References cited:
- CN-A- 107 804 848
- RU-C1- 2 042 617
- US-A- 3 624 004
- HEIDARINEJAD ZOHA ET AL: "Methods for preparation and activation of activated carbon: a review", ENVIRONMENTAL CHEMISTRY LETTERS, SPRINGER-VERLAG, HEIDELBERG, DE, vol. 18, no. 2, 4 January 2020 (2020-01-04), pages 393-415, XP037043574, ISSN: 1610-3653, DOI: 10.1007/S10311-019-00955-0 [retrieved on 2020-01-04]
- YUTING ZHU ET AL: "Applications of lignin-derived catalysts for green synthesis", GREEN ENERGY & ENVIRONMENT, vol. 4, no. 3, 18 January 2019 (2019-01-18), pages 210-244, XP055641471, ISSN: 2468-0257, DOI: 10.1016/j.gee.2019.01.003
- SUN Y ET AL: "Preparation of Activated Carbon with Large Specific Surface Area from Reed Black Liquor", ENVIRONMENTAL TECHNOLOGY, SELPER LTD, GB , vol. 28, no. 5 1 May 2007 (2007-05-01), pages 491-497, XP009534765, ISSN: 0959-3330, DOI: 10.1080/09593332808618810 Retrieved from the Internet: URL:http://www.tandfonline.com/doi/abs/10. 1080/09593332808618810

## Description

### FIELD

The present invention relates to methods for producing active carbon, in particular to methods comprising pyrolyzing carbonaceous materials with a mixture of alkali metal carbonate and/or alkali metal bicarbonate and alkali metal chloride.

### BACKGROUND

The conventional active carbon possesses specific surface area (SSA) in range 500-1500 m²/g. However, larger surface area is beneficial for many applications such as when active carbon is used for drinking water purification or as an adsorbent for natural gas.

Fierro et al. (Microporous Mesoporous Mater. 101, 419-431) prepared active carbon from Kraft lignin with potassium hydroxide. The activation was made at various temperatures, hydroxide to lignin mass ratios, activation times, flow rates of inert gas, and heating rates. The surface areas obtained was up to 3100 m²/g.

Potassium carbonate is also a suitable activator for the producing of active carbon. However, it is less efficient compared to KOH which is responsible for the erosion and etching during the activation process (McEnaney, Handbook of Porous Solids, 2002, Vol 3, 4.8.2. Properties of Activated Carbons, pp. 1828-1863, Schüth, F., Sing, S.W. Weitkamp, J. Eds. Wiley-VCH Verlag GmbH).

WO2017/205960A1 disclosed that active carbons with surface areas of 1000 - 3500 m²/g can be produced at high temperatures by chemical activation agents derived from various alkali metal salts and second salts and nitrogen containing compounds.

RU2042617C1 disclosed a method for producing granulated active carbon including mixing hydrolytic lignin with an aqueous solution of potassium carbonate and potassium halide, granulating the mixture, heat treating of granules and washing them with water.

US3624004 disclosed a process for the production of activated carbons by controlled oxidative activation carbonaceous material with carbon dioxide.

Sun Y. et al. (Environmental Technology, 2007, 28:5, pp 491-497; DOI: 10.1080/09593332808618810) disclosed a method for preparation of activated carbon with large specific surface area and well-developed porosity by pyrolysis of teCOs-impregnated lignin precipitated from reed pulp black liquors.

However, there is still need for further methods for producing active carbon of large surface area.

### SUMMARY

The following presents a simplified summary in order to provide a basic understanding of some aspects of various embodiments of the invention. The summary is not an extensive overview of the invention. It is neither intended to identify key nor critical elements of the invention, nor to delineate the scope of the invention. The following summary merely presents some concepts of the invention in a simplified form as a prelude to a more detailed description of exemplifying embodiments of the invention.

It was observed that when a mixture of potassium carbonate and /or potassium bicarbonate and potassium chloride was used as an activation agent in a method for producing active carbon, active carbon with large surface area was obtained.

In accordance with the invention, there is provided a method, according to claim 1, for producing active carbon, the method comprising the following steps:
a) admixing
   (i) potassium carbonate,
   (ii) potassium chloride, and
   (iii) hydrolytic lignin
      wherein ratio of the potassium chloride and potassium carbonate is 1/1 by weight to form an admixture,
b) pyrolyzing the admixture at a temperature from 850 °C to 900 °C to yield
   ○ pyrolytic gases,
   ○ active carbon, and
   ○ an inorganic part comprising potassium and potassium chloride, and
c) separating the pyrolytic gases, the active carbon, and the inorganic part, and optionally
d) combusting the pyrolytic gases to yield carbon dioxide.

A number of exemplifying and non-limiting embodiments of the invention are described in accompanied dependent claims.

Various exemplifying and non-limiting embodiments of the invention and to methods of operation, together with additional objects and advantages thereof, are best understood from the following description of specific exemplifying embodiments when read in connection with the accompanying figures.

The verbs "to comprise" and "to include" are used in this document as open limitations that neither exclude nor require the existence of also unrecited features. The features recited in depending claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

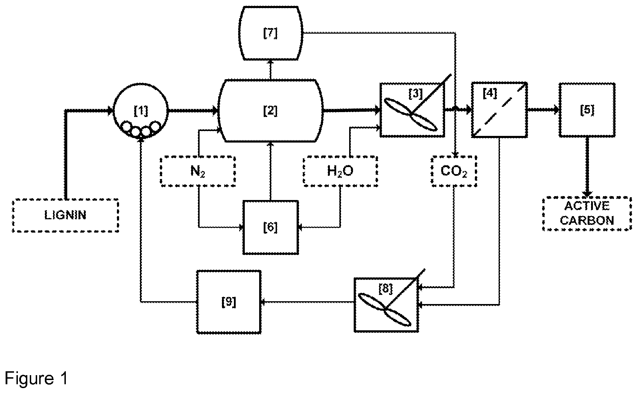

Figure 1 shows an exemplary non-limiting embodiment of the method of the present disclosure for producing active carbon, and recycling the reagents used in the method.

### DESCRIPTION

An example, not forming part of the invention, concerns a method for producing active carbon. The method comprises the following steps:
a) admixing
   (i) alkali metal carbonate and/or alkali metal bicarbonate,
   (ii) alkali metal chloride, and
   (iii) carbonaceous material
   to form an admixture,
b) pyrolyzing the admixture to yield
   o pyrolytic gases,
   o active carbon, and
   o an inorganic part comprising alkali metal and alkali metal chloride, and
c) separating the pyrolytic gases, the active carbon, and the inorganic part, and optionally also
d) combusting the pyrolytic gases to yield carbon dioxide.

The alkali metal may be selected from Li, K, Na, Rb, and Cs and mixtures thereof, preferably Na and K and mixtures thereof. Most preferable alkali metal is K. Preferable alkali metal chlorides are sodium chloride and potassium chloride. The most preferable alkali metal chloride is potassium chloride. Also, mixtures of alkali metal chlorides such as a mixture of NaCl and KCI can be used in the method.

The alkali metal carbonate is preferably selected from sodium carbonate and potassium carbonate or a mixture thereof. Preferable alkali metal carbonate is potassium carbonate. Also, mixtures of alkali metal carbonates such as a mixture of Na₂CO₃ and K₂CO₃ can be used in the method.

The alkali metal bicarbonate is preferably selected from sodium bicarbonate and potassium bicarbonate or a mixture thereof. Preferable alkali metal bicarbonate is potassium bicarbonate. Also, mixtures of alkali metal bicarbonates such as a mixture of NaHCOs and KHCOs as well as mixtures of alkali metal carbonates and alkali metal bicarbonates such as a mixture of Na₂CO₃, K₂CO₃, NaHCOs, and KHCOs can be used.

Ratio of (i) the alkali metal carbonate and/or alkali metal bicarbonate and (ii) the alkali metal chloride of step a) typically, from 5/1 by weight to 1/2 by weight, preferably 1/1 by weight.

A preferable mixture comprises potassium carbonate and potassium chloride. Another preferable mixture comprises potassium bicarbonate and potassium chloride.

According to a preferable example not forming part of the invention, the carbonaceous material comprises lignin.

The lignin is typically selected from hydrolytic lignin and kraft lignin, preferably hydrolytic lignin, or mixtures thereof. According to a preferable embodiment the carbonaceous material is lignin, most preferably hydrolytic lignin.

According to a preferable example, not forming part of the invention, the step a) comprises admixing
(i) potassium carbonate,
(ii) potassium chloride, and
(iii) lignin.

K₂CO₃/KCl ratio is typically, from 5/1 by weight to 1/2 by weight, preferably 1/1 by weight.

According to another preferable embodiment the step a) comprises admixing
(i) potassium bicarbonate,
(ii) potassium chloride, and
(iii) lignin.

KHCO₃/KCl ratio is typically, from 5/1 by weight to 1/2 by weight, preferably 1/1 by weight.

Pyrolysis is performed preferably under inert or at least low O₂ content atmosphere. The pyrolyzing is typically at temperature from 600 °C to 1000 °C, preferably from 700 °C to 900 °C, more preferably from 850 °C to 900 °C. The pyrolysis produces active carbon and potassium chloride. The inorganic part may be removed by leaching, and the isolated active carbon is dried.

An exemplary non-limiting flowsheet of active carbon production is shown in Figure 1. The carbonaceous material (lignin) is mixed with (i) alkali metal carbonate and/or alkali metal bicarbonate and (ii) alkali metal chloride such as potassium carbonate and potassium chloride in a ball mill 1. Then the mixture is transferred to the carbonization furnace 2 where pyrolysis and activation are carried out simultaneously. Next, the mixture of chemicals and carbon obtained after pyrolysis/activation stage is transferred to the washing tank 3 to leach out the chemicals from the produced active carbon. Then the obtained active carbon is separated on a filter 4 and dried using a dryer 5.

According to the invention the alkali metal carbonate is potassium carbonate. It is converted to metallic potassium during the carbonization process according to chemical reaction **(1)**

K₂CO₃ + 2C = 2K + 3CO **(1)**

In order to prevent self-ignition of the metallic potassium with a contact of air, once the temperature of furnace has decreased to ambient temperature the nitrogen flow is preferably saturated with water in a tank 6. An exemplary saturation time is 3 hours. The metallic potassium reacts with water which leads to KOH formation (chemical reaction **(2)).**

2K + 2H₂O = 2KOH + H₂ **(2)**

The obtained KOH could be also used for active carbon production (Table 1, Sample 6).

To obtain potassium carbonate from KOH, the solution goes to a mixing tank 8 where KOH reacts with CO₂ with a formation of K₂CO₃ according to chemical reaction **(3)**

2KOH + CO₂ = K₂CO₃ + H₂O **(3)**

The solution of K₂CO₃ and KCI is evaporated using dryer 9 and chemicals may be supplied back to the ball mill 1. The pyrolytic gases (pyro gas) are combusted in combustor 7. The obtained flue gas (containing CO₂) is supplied to mixing tank 8 for further reaction with KOH.

Accordingly, the method is also suitable for recycling the alkali metal carbonate and the alkali metal chloride used as the activating agent in the process. Also, carbon dioxide obtainable from pyrolytic gases can be used in the process.

According to this example of the disclosure, the recycling comprises
e) treating the inorganic part of step c) with water to produce an admixture comprising alkali metal hydroxide, and alkali metal chloride,
f) treating the admixture with carbon dioxide to produce alkali metal carbonate, and
g) recycling the admixture comprising alkali metal carbonate and alkali metal chloride to step a).

According to a preferable example of the disclosure, the carbon dioxide is obtained by combusting the pyrolytic gases.

The recycling produces alkali metal hydroxide which can be used in the method for producing active carbon instead of alkali metal carbonate and/or alkali metal bicarbonate. The alkali metal hydroxide is preferably potassium hydroxide.

According to one example, not forming part of the invention, part of the alkali metal hydroxide is treated with carbon dioxide to alkali metal carbonate and part of the alkali metal hydroxide is used in the method for producing active carbon.

According to still another example, not forming part of the invention, the present disclosure concern use of a mixture of
(i) alkali metal carbonate and/or alkali metal bicarbonate, and
(ii) alkali metal chloride
as an activation agent in a method for producing active carbon.

The alkali metal is selected from Li, Na, K, Rb or Cs or mixtures thereof, preferably Na and K or mixtures thereof, most preferably K.

According to a preferable example, not forming part of the invention, the mixture comprises (i) potassium carbonate and/or potassium bicarbonate and (ii) potassium chloride. According to another preferable embodiment the mixture comprises (i) potassium carbonate and (ii) potassium chloride. According to still another preferable example, not forming of the invention, the mixture comprises (i) potassium bicarbonate and (ii) potassium chloride.

The (i)/(ii) ratio is typically from 5/1 by weight to 1/2 by weight, preferably 1/1 by weight.

### EXPERIMENTS

### Materials

The raw material was coniferous hydrolytic lignin with a moisture content 6%. K₂CO₃ and KCI were of analytical purity and were dried under vacuum at 105 °C to remove moisture before use. The deionized water was used for any purposes. The nitrogen gas was 99.999% purity.

### Methods

### Producing of active carbon using K₂CO₃ and KCI

The hydrolytic lignin was mixed with K₂CO₃ and KCI in a mortar. The amount of K₂CO₃ and KCI was varied according to Table 1. The obtained admixture was transferred to a tube furnace and heated up at 5 °C/min to target temperatures 900 °C. The carbonization was maintained at a target temperature for 60 min. The carbonization was conducted under nitrogen flow at 2 L/min. Afterwards, the composite of carbon and chemicals was mixed with water. Chemicals were dissolved out by washing several times on a Bucher funnel until neutral pH. The resultant carbon was dried under vacuum at 105 °C for 16 hours.

### Producing of active carbon using KOH and KCI

In the same manner, the active carbon can be produced using KOH instead of K₂CO₃ (Table 1, Sample #6) simultaneously with KCI. KOH is obtained in the process through the chemical reaction (2).

### Characterization

The resultant carbon was studied by using N₂ physisorption on a Tristar^{®} II Plus, Micromeritics. All of the specified below characteristics were derived from N₂ adsorption-desorption isotherms. The values of SSA were estimated using Brunauer, Emmett and Teller (BET) theory. The total pore volume was calculated at p/p0 = 0.99. The micropore volume was calculated using Dubin-Radushkevich (DR) equation.

**Table 1. Characteristics of obtained active carbons using K₂CO₃ and KCI.**

| Sample | K₂CO₃, g/g | KCl, g/g | SSA, m²/g | V_{micro}, cm³/g | Vₜₒₜₐₗ, cm³/g | Yield, % |
|---|---|---|---|---|---|---|
| 1 | 3.00 | 0 | 2295 | 0.95 | 1.09 | 22.87 |
| 2 | 1.00 | 1.00 | 2586 | 0.97 | 1.12 | 36.98 |
| 3 | 1.50 | 1.50 | 2690 | 1.05 | 1.25 | 31.03 |
| 4 | 2.00 | 2.00 | 2603 | 1.06 | 1.37 | 25.90 |
| 5 | 3.93 | 1.50 | 2532 | 1.04 | 1.27 | 19.25 |
| 6 | 1.50 (KOH*) | 1.50 | 3236 | 1.02 | 1.67 | 15.58 |

| | | | | | | |
|---|---|---|---|---|---|---|
| * obtained from K₂CO₃ through the chemical reaction (**2**) Samples 2-4, 6 are examples according to the invention and samples 1, 5 are comparative examples. | | | | | | |

### Results

To verify the suitability of the admixture of K₂CO₃ and KCI different mixtures were prepared. Obtained samples possess specific surface area significantly exceeding the values for typical commercial active carbons 2532-2690 m²/g. Therefore, K₂CO₃ together with KCI is suitable for producing active carbon. Furthermore, the use of one or more salts comprising phosphorus and oxygen, salts comprising nitrogen and oxygen or salts comprising sulfur and oxygen together or one or more nitrogen containing compounds together with alkali metal salts as disclosed in WO2017/205960A1 is avoided.

From Table 1, it is also clear that K₂CO₃/KCl mixture is more efficient compared to use only K₂CO₃. SSA is significantly larger while the consumption of K₂CO₃ (gram of chemical per gram of raw material) is significantly lower. K₂CO₃ is consumed in the process (equation (1)) while KCI is not involved in the chemical reaction.

If KOH is used instead of K₂CO₃ the obtained active carbon has a larger surface area, however, the yield of carbon is reduced compared to carbons prepared with mixtures containing K₂CO₃.

The specific examples provided in the description given above should not be construed as limiting the scope and/or the applicability of the appended claims.

## Claims

1. A method for producing active carbon, the method comprises following steps:
a) admixing
i. potassium carbonate,
ii. potassium chloride and
iii. hydrolytic lignin
wherein ratio of the potassium chloride and potassium carbonate is 1/1 by weight to form an admixture,
b) pyrolyzing the admixture to yield
o pyrolytic gases,
o active carbon, and
o an inorganic part comprising alkali metal and alkali metal chloride,
c) separating the active carbon, the inorganic part, and the pyrolytic gases, and optionally
d) combusting the pyrolytic gases to yield carbon dioxide
**characterized in that** the pyrolyzing is at temperature from 850 °C to 900 °C.

2. The method according to claim 1, the method comprising
e) treating the inorganic part of step c) with water to produce an admixture comprising potassium hydroxide and potassium chloride,
f) treating at least part of the admixture with carbon dioxide to produce potassium carbonate, and
g) recycling the admixture comprising potassium carbonate and potassium chloride to step a).

3. The method according to claim 2 wherein the carbon dioxide is the carbon dioxide of step d).

## Patentansprüche

1. Verfahren zur Herstellung von Aktivkohle, wobei das Verfahren die folgenden Schritte umfasst:
a) Zusammenmischen von
i. Kaliumcarbonat,
ii. Kaliumchlorid und
iii. hydrolytischem Lignin,
wobei das Verhältnis des Kaliumchlorids und Kaliumcarbonats 1/1, auf das Gewicht bezogen, beträgt, um eine Zusammenmischung zu bilden,
b) Pyrolysieren der Zusammenmischung, um Folgende zu ergeben
o pyrolytische Gase,
o Aktivkohle und
o einen anorganischen Teil umfassend Alkalimetall und Alkalimetallchlorid,
c) Trennen der Aktivkohle, des anorganischen Teils und der pyrolytischen Gase und
wahlweise
d) Verbrennen der pyrolytischen Gase, um Kohlendioxid zu ergeben,
**dadurch gekennzeichnet, dass** das Pyrolysieren bei einer Temperatur von 850 °C bis 900 °C stattfindet.

2. Verfahren nach Anspruch 1, wobei das Verfahren Folgendes umfasst
e) Behandeln des anorganischen Teils aus Schritt c) mit Wasser, um eine Zusammenmischung herzustellen, die Kaliumhydroxid und Kaliumchlorid umfasst,
f) Behandeln mindestens eines Teils der Zusammenmischung mit Kohlendioxid, um Kaliumcarbonat herzustellen, und
g) Rückführen der Zusammenmischung, die Kaliumcarbonat und Kaliumchlorid umfasst, zu Schritt a).

3. Verfahren nach Anspruch 2, wobei das Kohlendioxid das Kohlendioxid aus Schritt d) ist.

## Revendications

1. Procédé de production de carbone actif, le procédé comprend les étapes suivantes :
a) le mélange
i. du carbonate de potassium
ii. du chlorure de potassium et
iii. de la lignine hydrolytique
dans lequel le rapport entre le chlorure de potassium et le carbonate de potassium est de 1 /1 en poids pour former un mélange,
b) la pyrolyse de l'adjuvant pour obtenir
∘ des gaz pyrolytiques
∘ du carbone actif, et
∘ une partie inorganique comprenant un métal alcalin et un chlorure de métal alcalin,
c) la séparation du carbone actif, de la partie inorganique et des gaz pyrolytiques, et éventuellement
d) la combustion des gaz pyrolytiques pour obtenir du dioxyde de carbone,
**caractérisé en ce que** la pyrolyse s'effectue à une température comprise entre 850 °C et 900 °C.

2. Procédé selon la revendication 1, comprenant
e) le traitement de la partie inorganique de l'étape c) avec de l'eau pour produire un mélange comprenant de l'hydroxyde de potassium et du chlorure de potassium,
f) le traitement d'au moins une partie du mélange avec du dioxyde de carbone pour produire du carbonate de potassium, et
g) le recyclage du mélange comprenant du carbonate de potassium et du chlorure de potassium à l'étape a) .

3. Procédé selon la revendication 2, dans lequel le dioxyde de carbone est le dioxyde de carbone de l'étape d).
